# EUROPÄISCHE PATENTANMELDUNG

(11) **EP 2 567 748 A1**
(43) Veröffentlichungstag der Anmeldung: **13.03.2013**
(21) Anmeldenummer: 12177091.1
(22) Anmeldetag: 19.07.2012
(51) Int. Cl.: B01D 65/10, B01D 46/10

(54) **Hygienischer Integritätstest bei Ultrafiltrationsanlagen**

(30) Priorität: 07.09.2011 DE 102011082284
(71) Anmelder: Krones AG, 93073 Neutraubling (DE)
(72) Erfinder: Scheu, Dirk, 86735 Amerdingen (DE); Zacharias, Jörg, 93096 Köfering (DE)
(74) Vertreter: Grünecker, Kinkeldey, Stockmair & Schwanhäusser

(57) **Zusammenfassung**

Die vorliegende Erfindung betrifft ein Verfahren zum Testen der Integrität von Hohlfasermembranen, mit den folgenden Schritten: Einbringen eines sterilen monomolekularen Gases in ein Inneres der Hohlfasermembran; Beaufschlagen des sterilen monomolekularen Gases im Inneren der Hohlfasermembran zu einem ersten Zeitpunkt mit einem Anfangsgasdruck; und Messen des Drucks des sterilen monomolekularen Gases zu einem zweiten Zeitpunkt nach dem ersten Zeitpunkt zur Bestimmung eines Endgasdrucks.

## Beschreibung

### Gebiet der Erfindung

Die vorliegende Erfindung betrifft ein Verfahren zum Prüfen der Integrität einer Hohlfasermembran.

### Stand der Technik

Um die Funktionalität der bei der Ultrafiltration häufig eingesetzten Hohlfasern zu überprüfen, kann ein sogenannter Integritätstest durchgeführt werden. Dabei wird die Hohlfasermembran mittels Luft leer gedrückt, so dass beispielsweise darin befindliches Permeat durch die Poren der Hohlfasermembrane auf die Unfiltratseite gedrückt wird. Anschließend wird die Luft mit einem Überdruck von beispielsweise 1 bar beaufschlagt. Da die Luft bei diesem Druck nicht durch die Membrane dringen kann, muss der anstehende Luftdruck über einige Minuten konstant bleiben und nicht abfallen.

Dieser Test ist an den sogenannten Bubblepointtest angelehnt, welcher auch Blasendrucktest oder Blaspunktmessung genannt wird. Dabei wird das Membrangehäuse z. B. von der Permeatseite langsam mit Druck beaufschlagt, um das Wasser aus den Poren zu drängen. Wenn der Druck auf der Permeatseite des Filters weiter erhöht wird, treten bei einer ausreichenden Druckbeaufschlagung Luftblasen auf der Unfiltratseite aus. Die dazu erforderliche Druckdifferenz ist gegeben aus dem Vierfachen der Oberflächenspannung der Flüssigkeit, also beispielsweise des Wassers, multipliziert mit dem Kosinus des Benetzungswinkels und geteilt durch den Porendurchmesser.

Falls die in Druckdifferenz beim Integritätstest unterhalb des Blasendrucks liegt, sollte der beaufschlagte Druck über eine gewisse Zeit erhalten bleiben, da in dem Fall und bei intakten Membranen keine Blasen entweichen können. Dies gilt dann als Nachweis, dass die Membranen in Ordnung sind und kein sogenannter Faserbruch und/oder eine Leckage vorliegen.

Nachteilig ist dabei jedoch, dass bei der Verwendung von komprimierter Umgebungsluft als Fluid zur Druckbeaufschlagung die Gefahr besteht, dass Verunreinigungen, insbesondere Luftkeime, in die Hohlfasermembranen eingetragen werden. Diese Situation kann zwar dadurch verbessert werden, dass sogenannte Sterilluft verwendet wird, wobei jedoch bei deren Herstellung die Sicherstellung ihrer Reinheit nur mit sehr aufwändigen Vorkehrungen gewährleistet werden kann.

Angesichts dieser Nachteile des Stands der Technik ist es eine Aufgabe der vorliegenden Erfindung, ein Verfahren zur Verfügung zu stellen, mit der ein effizienter hygienischer Test auf fehlerhafte bzw. beschädigte Membranen durchgeführt werden kann.

### Beschreibung der Erfindung

Die oben genannte Aufgabe wird gelöst durch ein Verfahren zum Testen der Integrität von Hohlfasermembranen, mit den folgenden Schritten: Einbringen eines sterilen monomolekularen Gases in ein Inneres der Hohlfasermembran; Beaufschlagen des sterilen monomolekularen Gases im Inneren der Hohlfasermembran zu einem ersten Zeitpunkt mit einem Anfangsgasdruck; und Messen des Drucks des sterilen monomolekularen Gases zu einem zweiten Zeitpunkt nach dem ersten Zeitpunkt zur Bestimmung eines Endgasdrucks.

Das Einbringen eines sterilen Gases in das Innere der Hohlfasernmembran hat den Vorteil, dass dadurch keine Keime in die Hohlfasermembran und somit in das Permeat bzw. Filtrat gelangen können.

Weiterhin hat das Beaufschlagen des Gases im Inneren der Hohlfasermembran zu einem ersten Zeitpunkt mit einem Anfangsgasdruck und das Messen des Drucks des sterilen Gases zu einem zweiten Zeitpunkt nach dem ersten Zeitpunkt zur Bestimmung eines Endgasdrucks den Vorteil, dass nur ein Druckmesser erforderlich ist und das erfindungsgemäße Verfahren weitgehend automatisiert ablaufen kann, während bei der Blasenpunktmessung auf zwei Seiten der Membran gemessen werden muss und weiterhin eine Beobachtung beispielsweise durch Bedienpersonal erfolgen muss, um den Zeitpunkt der Blasenbildung zu erfassen.

Die Verwendung eines monomolekularen Gases, also eines reinen Gases, also keines Gasgemisches, sondern eines Gases mit einer vorgegebenen molekularen Zusammensetzung und einer einzigen spezifischen molaren Masse, hat den Vorteil, dass die Sensitivität des Tests verbessert wird, da die Trenngrenze der Membran in Bezug auf Durchlässigkeit von der spezifischen molaren Masse des Gases abhängt. Beispielsweise kann es im Falle eines Gasgemisches wie im Stand der Technik vorkommen, dass Bestandteile mit einer bestimmten molaren Masse bereits durch die Poren entweichen, während Gasbestandteile mit einer anderen spezifischen molaren Masse noch nicht entweichen, sondern erst bei einem höheren Druck. Auf diese Weise ergäbe sich eine Verschmierung des erforderlichen Druckunterschieds, bei dem eine Blasenbildung im Bubblepointtest erfolgt. Durch das spezifisch ausgewählte reine Gas ist die Trenngrenze schärfer als bei einem Gasgemisch wie etwa Luft.

Das erfindungsgemäße Verfahren kann weitergebildet werden, indem die folgenden weiteren Schritte vorgesehen sind, nämlich das Bewerten der Hohlfasermembran als fehlerfrei, falls der Endgasdruck um weniger als einen vorbestimmten Differenzdruck von dem Anfangsgasdruck abweicht, und das Bewerten der Hohlfasermembran als fehlerbehaftet, falls der Endgasdruck um den vorbestimmten Differenzdruck oder mehr von dem Anfangsgasdruck abweicht. Indem in die Bewertung der Hohlfasermembran als fehlerfrei bzw. als fehlerbehaftet durch den Unterschied des Drucks am Anfang bzw. am Ende des Tests durchgeführt wird, kann ein Schwellenwert in Form des vorbestimmten Differenzdrucks festgelegt werden, ab dem die Hohlfasermembran als fehlerbehaftet gilt. Dies hat den Vorteil, dass ein eventuell vorhandener langsamer Druckabfall z. B. aufgrund von Abkühlungseffekten des sterilen Gases oder aufgrund von einigen wenigen größeren Poren der Membran in die Bewertung mit einbezogen werden kann.

Gemäß einer andern Weiterbildung des erfindungsgemäßen Verfahrens kann der zweite Zeitpunkt eine vorbestimmte Zeitdauer nach dem ersten Zeitpunkt liegen. Auf diese Weise wird eine Testdauer vorgegeben, bei der eine sichere Bewertung der Hohlfasermembran durchgeführt werden kann, oder wobei eventuell vorhandene Einschwingprozesse abgeklungen sind.

Der Schritt des Einbringens des sterilen Gases in das Innere der Hohlfasermembran kann ein Herausdrücken von Flüssigkeit aus der Hohlfasermembran umfassen. Auf diese Weise wird mit dem sterilen Gas ein aus dem Filtrationsprozess innerhalb der Hohlfasermembran vorliegende Flüssigkeitsvolumen bereits mit dem sterilen Gas ausgedrückt, wonach sich dann unmittelbar der Integritätstest anschließen kann.

Das Verfahren kann dahingehend weitergebildet werden, dass der Anfangsgasdruck unter einem Gasblasendruck liegt. Der Gasblasendruck ist so definiert, dass bei ansteigendem Druck bei dem Gasblasendruck und über dem Gasblasendruck ein Gasblasenaustritt erfolgen würde, und zwar durch die Poren einer fehlerfreien Membran. Indem der Anfangsgasdruck unter dem Gasblasendruck gewählt wird, treten keine Gasblasen aus, und der Test der Membranen erfolgt über die Konstanz des Druckes (innerhalb eines bestimmten Bereichs).

Gemäß einer anderen Weiterbildung kann das sterile Gas frei von Sauerstoff, Stickstoff und Wasserstoff sein. Dies dient insbesondere dazu, eventuell vorhandene Keime, die Sauerstoff, Stickstoff oder Wasserstoff verwerten können, nicht weiter am Leben zu erhalten.

Gemäß einer anderen Weiterbildung kann das sterile monomolekulare Gas Kohlenstoffdioxid sein. Bei dem besonders bevorzugten Kohlenstoffdioxid wird durch dessen molare Masse von 44 g/mol die spezifische gasförmige Dichte bei gleichem Volumen größer als bei Luft sein, wodurch der Bubblepointdruck bzw. Gasblasendruck absinkt. Somit kann der Integritätstest bei Drücken unterhalb von 0,5 bar sicher durchgeführt werden. Auf diese Weise fällt das konstruktive System, nämlich das Membranmodul, nicht mehr in die Grenzwerte der Druckbehälterverordnung. Es versteht sich, dass das Gas gasförmig und nicht in einer gelösten Form vorliegen sollte. Ein weiterer Vorteil der Verwendung von Kohlenstoffdioxid besteht darin, dass das CO₂ eine desinfizierende Wirkung auf die Membran bewirkt. Ein weiterer Vorteil ist, dass beispielsweise in der Anwendung des erfindungsgemäßen Verfahrens in der Getränkeindustrie immer bereits Kohlenstoffdioxid in großem Umfang verfügbar ist.

Gemäß einer Weiterbildung können die Hohlfasermembranen, bei denen dieses Testverfahren angewendet wird, zur Ultrafiltration geeignet sein, wobei Partikel in der Größe von 0,1 bis 0,01 µm herausgefiltert werden können.

Weitere Merkmale und beispielhafte Ausführungsformen sowie Vorteile der vorliegenden Erfindung werden nachfolgend anhand der Zeichnungen näher erläutert. Es versteht sich, dass die Ausführungsformen nicht den Bereich der vorliegenden Erfindung erschöpfen. Es versteht sich weiterhin, dass einige oder sämtliche der im Weiteren beschriebenen Merkmale auch auf andere Weise miteinander kombiniert werden können.

### Zeichnungen

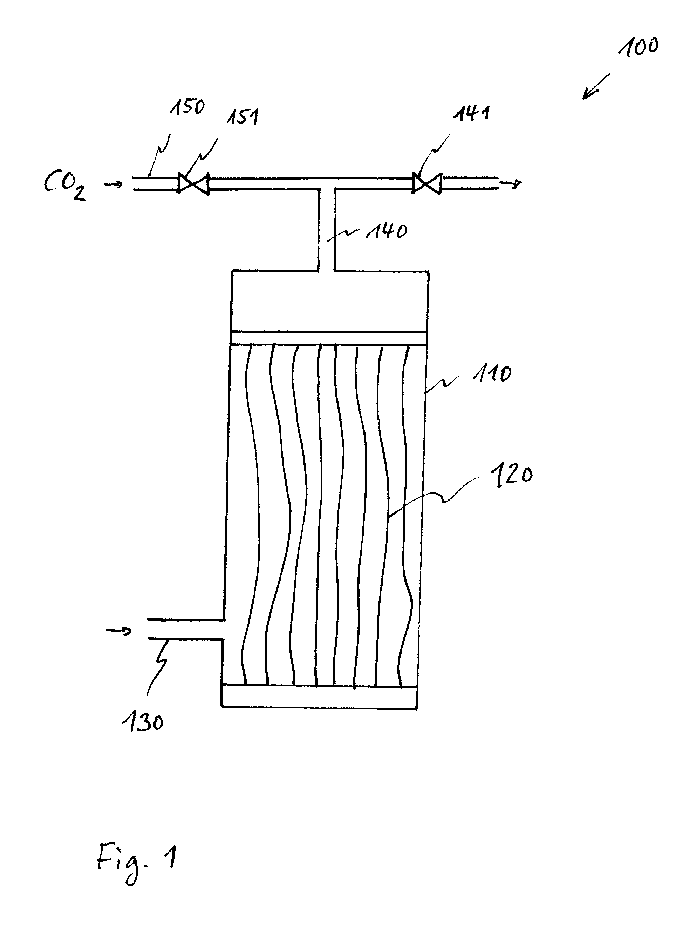

- Figur 1: veranschaulicht eine Ausführungsform des erfindungsgemäßen Verfahrens.

### Ausführungsformen

Figur 1 veranschaulicht eine Ausführungsform des erfindungsgemäßen Verfahrens im Zusammenhang mit einem Filtermodul 100. Das Filtermodul 100 umfasst ein Gehäuse 110 mit Hohlfasermembranen 120, die für die Ultrafiltration geeignet sind, wie etwa in der Getränkeindustrie üblich. Unfiltriertes Wasser, also Rohwasser, wird über einen Einlass 130 zugeführt. Dieses Rohwasser wird durch einen auf der Innenseite der Hohlfasermembranen anliegenden Unterdruck gefiltert und verlässt das Gehäuse 110 über eine Leitung 140 als Permeat, also als gefiltertes Wasser. Das Modul 100 umfasst weiterhin ein Permeatventil 141 in der Permeatleitung 140. Zudem ist die Permeatleitung 140 über ein Gasventil 150 mit einer Gasleitung 150 gekoppelt.

Die Filtration von Wasser mit dem Filter vom Modul, welches Hohlfasernmembrane enthält, wird zur Durchführung des Integritätstests angehalten. Dazu wird das Ventil 140 geschlossen. Dann wir das Gasventil 150 geöffnet, und über die Permeatleitung wird in umgekehrter Richtung (bzgl. der Fitrationsrichtung) Kohlenstoffdioxid hereingedrückt, wodurch Permeat in umgekehrter Richtung durch die Membranen 120 auf die Unfiltratseite gedrückt wird. Wenn die Hohlfasermembranen 120 leer gedrückt sind, wird der Druck des CO₂-Gases noch weiter erhöht, jedoch bleibt er unterhalb des Blasenpunkts, bei dem das CO₂ Blasen durch die Poren der Membrane 120 entweichen würde. Der Druck wird am Anfang und am Ende des Tests gemessen und ein Differenzdruck aus dem Anfangsdruck und dem Enddruck ermittelt. Falls diese Differenz eine bestimmte Schwelle überschreitet, wird davon ausgegangen, dass in einem oder mehreren der Hohlfasern ein Bruch bzw. ein sonstiges Leck aufgetreten ist. Ein solches Leck führt zu einem Entweichen des Gases und somit einem Druckabfall über den Zeitraum der Messung. In diesem Ausführungsbeispiel mit CO₂ als Gas wird den Anfangsdruck bei ca. 0,5 bar eingestellt. Falls dieser Druck nach einigen Minuten beispielsweise um 10 % abgefallen ist, kann von einer Fehlstelle in einer oder mehrerer der Hohlfasermembranen 120 ausgegangen werden.

Durch die Verwendung von CO₂ als einzigem Gas kann eine gute Trennschärfe für die Feststellung von Faserbrüchen erzielt werden. Im Gegensatz dazu ist beispielsweise die üblicherweise verwendete Luft ein Gasgemisch mit ca. 78 % Stickstoff mit einer molaren Masse von 28 g/mol und 21 % Sauerstoff mit 32 g/mol und geringen Mengen anderer Gase. Die unterschiedliche molare Masse führt zu einem unterschiedlichen Entweichungsverhalten, da die Partialdrücke der Bestandteile unterschiedlich sind. Mit CO₂ und seiner molaren Masse von 44 g/mol ist lediglich ein (Partial-) Druck vorhanden und für den Blasenpunkt ausschlaggebend.

## Patentansprüche

1. Verfahren zum Prüfen der Integrität einer Hohlfasermembran, mit den folgenden Schritten:
Einbringen eines Gases in ein Inneres der Hohlfasermembran;
Beaufschlagen des Gases im Inneren der Hohlfasermembran zu einem ersten Zeitpunkt mit einem Anfangsgasdruck; und
Messen des Drucks des Gases zu einem zweiten Zeitpunkt nach dem ersten Zeitpunkt zur Bestimmung eines Endgasdrucks;
wobei das Gas ein steriles, monomolekulares Gas ist.

2. Verfahren nach Anspruch 1, mit den weiteren Schritten:
Bewerten der Hohlfasermembran als fehlerfrei, falls der Endgasdruck um weniger als einen vorbestimmten Differenzdruck von dem Anfangsgasdruck abweicht; und
Bewerten der Hohlfasermembran als fehlerbehaftet, falls der Endgasdruck um den vorbestimmten Differenzdruck oder mehr von dem Anfangsgasdruck abweicht.

3. Verfahren nach Anspruch 1 oder 2, wobei der zweite Zeitpunkt eine vorbestimmte Zeitdauer nach dem ersten Zeitpunkt liegt.

4. Verfahren nach einem der Ansprüche 1 bis 3, wobei der Schritt des Einbringens des Gases in das Innere der Hohlfasermembran ein Herausdrücken von Flüssigkeit aus der Hohlfasermembran umfasst.

5. Verfahren nach einem der Ansprüche 1 bis 4, wobei der Anfangsgasdruck unter einem Gasblasendruck liegt.

6. Verfahren nach einem der Ansprüche 1 bis 5, wobei das Gas frei von Sauerstoff, Stickstoff und Wasserstoff ist.

7. Verfahren nach einem der Ansprüche 1 bis 6, wobei das Gas Kohlenstoffdioxid ist.

8. Verfahren nach einem der Ansprüche 1 bis 7, wobei die Hohlfasern zur Ultrafiltration geeignet sind.
